# EUROPÄISCHE PATENTSCHRIFT

(11) **EP 2 593 708 B1**
(45) Veröffentlichungstag und Bekanntmachung des Hinweises auf die Patenterteilung: **08.11.2017**
(21) Anmeldenummer: 11725097.7
(22) Anmeldetag: 15.06.2011
(51) Int. Cl.: G03B 17/56, F16M 11/20, F16M 11/18, F16M 11/10, F16M 11/04

(54) **STATIVKOPF**
TRIPOD HEAD
TÊTE DE TRÉPIED

(30) Priorität: 14.07.2010 DE 102010036405
(43) Veröffentlichungstag der Anmeldung: 22.05.2013
(73) Patentinhaber: Vogt, Philippe, 70190 Bussieres (FR)
(72) Erfinder: Vogt, Philippe, 70190 Bussieres (FR)
(74) Vertreter: Moser Götze & Partner Patentanwälte mbB
(86) Internationale Anmeldenummer: PCT/EP2011/059974
(87) Internationale Veröffentlichungsnummer: WO 2012/007244

(56) Entgegenhaltungen:
- EP-A1- 1 657 484
- EP-A1- 2 172 686
- CN-A- 101 598 886
- DE-A1- 2 944 351
- GB-A- 2 291 468
- US-A- 4 763 151
- US-A1- 2002 126 110
- US-A1- 2007 230 946
- US-A1- 2008 151 483

## Beschreibung

Die Erfindung betrifft eine Halterung für ein optisches Gerät zur Veränderung der Ausrichtung des optischen Geräts, insbesondere für Foto-, Video- oder Filmkameras, mit einem ersten Bauteil mit einer ersten Schwenkachse zur Verbindung mit einem Stativ und einem zweiten Bauteil mit einer zweiten Schwenkachse zur Verbindung mit dem optischen Gerät.
Solche Halterrungen werden auch als Dreiwegeneiger bezeichnet. Ein Dreiwegeneiger ist ein Stativkopf für Fotostative, also eine Halterung für ein optisches Gerät, insbesondere für Foto-, Video- oder Filmkameras, mit der das optische Gerät an dem Stativ befestigt und die Ausrichtung des optischen Geräts eingestellt bzw. verändert werden kann. Ein Dreiwegeneiger lässt sich in drei Achsen unabhängig verstellen. Man kann den Stativkopf horizontal schwenken, nach oben und unten neigen sowie seitlich kippen.
Eine Sonderform des Dreiwegeneigers ist der Getriebeneiger (Getriebe-Neigekopf). Getriebeneiger sind Stativ-Köpfe mit Zahntrieb zur Verstellung der drei Achsen. Vorteile gegenüber herkömmlichen Dreiwege-Stativköpfen sind, dass sie je Achse einfach, stabil und insbesondere präziser eingestellt werden können. Die Einstellung mit selbsthemmendem Zahntrieb schützt vor dem Abstürzen oder Absinken schwerer Kamerakonstruktionen. Die präzise Verstellbarkeit ist insbesondere zur exakten Ausrichtung von Fachkameras und zur Paßgenauigkeit der einzelnen Aufnahmen bei der Panoramafotografie ein entscheidender Vorteil.

Getriebeneiger sind unter anderem von den Firmen Manfrotto (400'er Serie) und Arca Swiss (Cube C1) erhältlich. Der Arca Swiss Cube C1 geht unter anderem aus der EP 0 974 862 B1 hervor.

GB2291468A zeigt einen weiteren schwenkbaren Stativkopf.

Die bisher erhältlichen Modelle bauen relativ groß und sind zudem schwer. Ferner ist ihre Haltekraft relativ zur Größe und zum Gewicht im Vergleich zu Kugelkopf-Stativköpfen klein.
Demgegenüber besteht die Aufgabe der vorliegenden Erfindung einen Stativkopf bereitzustellen, der kompakt und leicht ist sowie eine hohe Haltekraft aufweist.

Diese Aufgabe wird durch den in Anspruch 1 wiedergegebenen Getriebeneiger gelöst. Weil die Halterung für ein optisches Gerät zur Veränderung der Ausrichtung des optischen Geräts, insbesondere für Foto-, Video- oder Filmkameras, mit einem ersten Bauteil mit einer ersten Schwenkachse zur Verbindung mit einem Stativ und einem zweiten Bauteil mit einer zweiten Schwenkachse zur Verbindung mit dem optischen Gerät umfasst, wobei die zwei Schwenkachsen quer, insbesondere im rechten Winkel, zu einander verlaufen und jeweils unabhängig voneinander verstellbar sind, wobei die erste Schwenkachse im ersten Bauteil und die zweite Schwenkachse ebenfalls im ersten Bauteil angeordnet sind, ist es möglich, eine besonders kompakte Halterung mit geringem Gewicht bereitzustellen.
Das optische Gerät wird also an dem zweiten Bauteil angebracht, ggf. mit Hilfe einer bekannten drehbaren Schnellspanneinheit, und die Halterung selber über das erste Bauteil mit dem Stativ usw. verbunden. Das erste Bauteil ist ein zylindrisches Bauteil, d.h. ein im Wesentlichen zylinderförmiges Teil.

Sinnvoll ist es dann, wenn die erste Schwenkachse durch die Längsmittelachse des zylindrischen Bauteils verläuft.
Wenn das erste Bauteil über ein drittes Bauteil mit einer dritten Schwenkachse mit dem Stativ verbindbar ist, wird ein weiterer Freiheitsgrad der Verstellung ermöglicht. Vorzugsweise ist dies ein "Panoramateller", also eine um 360 Grad drehbare und arretierbare Drehplatte.
Eine besonders kompakte Einheit ergibt sich, wenn das zweite Bauteil um die zweite Schwenkachse in dem ersten Bauteil verschwenkbar gelagert ist. Zusätzlich ist das erste Bauteil um die erste Schwenkachse in dem dritten Bauteil verschwenkbar gelagert. Entsprechend der Erfindung sind das erste und zweite Bauteil unabhängig voneinander jeweils über einen Antrieb um die jeweilige Schwenkachse verstellbar. Es handelt es sich bei der Halterung dann um einen Getriebeneiger. Die Antriebe sind durch Schneckengetriebe gebildet, die eine Schnecke aufweisen, die auf ein Schneckenrad einwirkt, das sich um die jeweilige Schenkachse dreht. Dabei ist das Schneckenrad (oder Zahnrad) mit dem Bauteil in Wirkverbindung bzw. bringbar (je nach Zustand des Entkopplungsmechanismus, siehe unten). Somit lässt sich eine präzise Verstellung bzw. Ausrichtung des optischen Geräts gegenüber dem Stativ erreichen. Vorzugsweise handelt es sich um ein selbsthemmendes Schneckengetriebe. Der Antrieb für die zweite Schwenkachse liegt auf der Längsmittelachse des zylindrischen Bauteils. Da der Antrieb für die zweite Schwenkachse entlang der ersten Schwenkachse verläuft, kann die Halterung umso kompakter ausfallen und gleichzeitig eine ansprechende Symmetrie erhalten werden.

Insbesondere ist so der Abstand zwischen den beiden Schwenkachsen besonders klein. Dies bewirkt neben der besonders kompakten Ausgestaltung auch eine Verringerung des Hebels, so dass die aufzubringenden bzw. zu kompensierenden Kräfte kleiner sind und dazu auch die Auslenkung des optischen Geräts bei einer Verstellung kleiner und somit exakter ist.
Damit für große Verstellwege nicht das Schneckengetriebe verwendet werden muss, ist es sinnvoll, wenn die Halterung eine "freie" Verstellung im Sinne eines Dreiwegeneigers erlaubt. Dazu sind die Antriebe jeweils mit einem Entkopplungsmechnismus versehen. Der Entkopplungsmechnismus umfasst einen entlang der Schwenkachse mit dem Bauteil verbundenen Konus mit einem Stift, wobei das Schneckenrad des Antriebs eine zentrale Öffnung aufweist, die an der dem Konus zugewandten Seite eine Innen umlaufenden Schrägfläche entsprechend dem Konus aufweist und der Stift das Schneckenrad durchgreift und auf der dem Konus abgewandten Seite in einen Stellknopf eingreift, der zum In- oder Aussereingriffbringen des Schneckenrads mit dem Konus, das Zahnrad und den Konus relativ zueinander verschiebt.

Diese Mechanik erlaubt es, eine Entkopplung in jeder Position oder Stellung vorzunehmen, ohne dass dazu langwierige Schraubbetätigungen oder Klemmhebel nötig sind.
In einer bevorzugten Ausführungsform ist der Stift im Fall des Entkopplungsmechnismus des Antriebs für das zweite Bauteil eine Spindel.

In einer ebenfalls bevorzugten Ausführungsform sind der Konus und der Stift im Fall des Entkopplungsmechnismus des Antriebs für das erste Bauteil vom Bauteil selbst gebildet.
Sinnvoll ist es, wenn die Innen umlaufende Schrägfläche des Zahnrads und der Konus mit sich entsprechenden Verzahnungen versehen sind, so dass beim Ineingriff eine drehfeste Verbindung erreicht wird, um ein "Rutschen" zu verhindern.

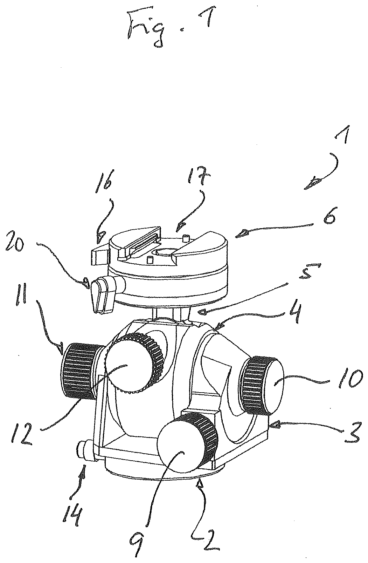

In einer zweiten nicht von der Erfindung umfassen Variante sind die Bauteile zum Fixieren ihrer Stellung um die Schwenkachsen jeweils mit einem Arretierungsmechnismus versehen, der einen entlang der Schwenkachse mit dem Bauteil verbundenen Konus mit einem Stift und ein Reibrad umfasst, wobei das Reibrad eine zentrale Öffnung aufweist, die an der dem Konus zugewandten Seite eine Innen umlaufenden Schrägfläche entsprechend dem Konus aufweist und der Stift das Reibrad durchgreift und auf der dem Konus abgewandten Seite in einen Stellknopf eingreift, der zum In- oder Aussereingriffbringen des Reibrads mit dem Konus, den Konus und das Reibrad relativ zu einander verschiebt.
Es handelt sich also bei dieser Variante um einen "normalen" Stativkopf ohne Antrieb. Es ist also im Gegensatz zur ersten Variante quasi der Antrieb entfernt worden und das Zahnrad des Antriebs durch ein Reibrad ersetzt worden. Die übrigen Bauteile entsprechen sich.
Somit ist klar, dass sich die Entkopplungsmechnismen und Arretierungsmechnismen bis auf das Zahnrad/Reibrad entsprechen können.
Somit ergeben sich auch die bereits oben genannten Vorteile.
Weitere Einzelheiten, Merkmale und Vorteile der Erfindung ergeben sich aus der nachfolgenden Beschreibung eines Ausführungsbeispiels anhand der Zeichnung, in der
Fig. 1 eine schematische perspektivische Ansicht eines Stativkopfs;

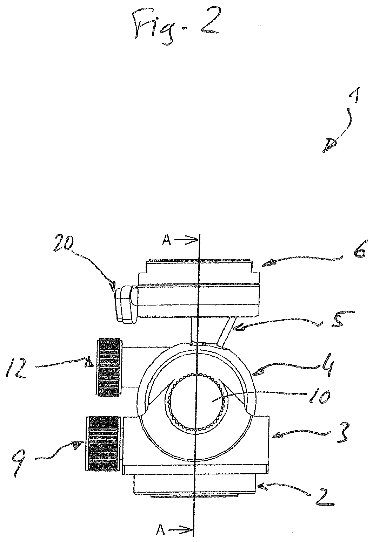

Fig. 2 eine Seitenansicht des Stativkopfs aus Figur 1;
Fig. 3 eine Vorderansicht des Stativkopfs aus Figur 1;
Fig. 4 einen Querschnitt durch den Stativkopf entlang der Linie A-A aus Figur 2;

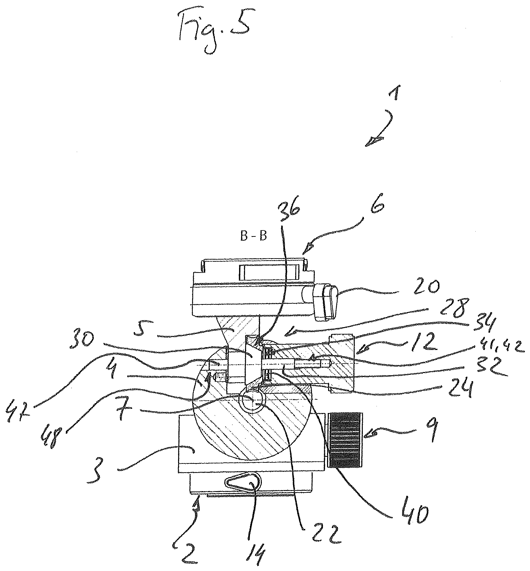

Fig. 5 einen Querschnitt durch den Stativkopf entlang der Linie B-B aus Figur 3 und

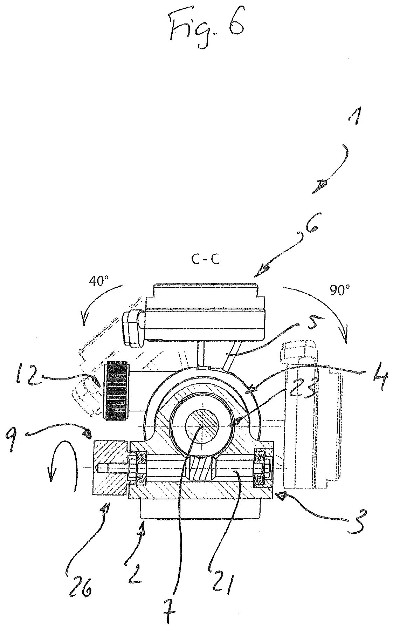

Fig. 6 einen Querschnitt durch den Stativkopf entlang der Linie C-C aus Figur 3.

In den Figuren ist der Stativkopf als Ganzes mit 1 bezeichnet. Er dient als Halterung für eine Fotokamera und somit zu dessen Fixierung an einem Stativ.

Die Halterung 1 umfasst zur Verbindung mit einem Stativ einen Drehteller 2, der über ein Schraubgewinde mit dem Stativ in bekannter Weise verbindbar ist. Die 360 Grad Drehung kann über einen Arretierhebel 14 an jeder Position fixiert werden.

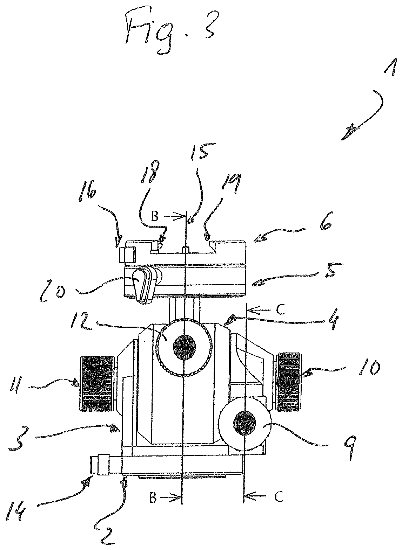

An dem Drehteller 2 ist ein Halteteil 3 befestigt, das eine Aufnahme für ein im Wesentlichen zylindrisches Element 4 bildet, das darin um eine Schwenkachse 7 schwenkbar ist. Das Element 4 ist also über den Drehteller 2 mit dem Stativ um eine vertikale Achse 15 (entspricht der Schnittlinie B-B in Figur 3) drehbar verbunden und kann selbst gegenüber dem Halteteil 3 um die Schwenkachse 7 verschwenkt werden.

Die vertikale Drehachse 15 und die Schwenkachse 7 verlaufen quer, insbesondere im rechten Winkel, zu einander und sind jeweils unabhängig voneinander verstellbar.

An dem im Wesentlichen zylindrischen Element 4 ist ein zweites Element 5 verbunden, das um eine weitere Schwenkachse 8 gegenüber dem im Wesentlichen zylindrischen Element 4 verschwenkbar ist.

Die weitere Schwenkachse 8 und die Schwenkachse 7 verlaufen quer, insbesondere im rechten Winkel, zu einander und die Elemente 4 bzw. 5 sind jeweils unabhängig voneinander über einen Antrieb (siehe unten) um die Schwenkachsen 7, 8 verstellbar. Es handelt sich also um einen Getriebeneiger.

An dem zweiten Element 5 ist eine Schnellspanneinrichtung 6 zum Einspannen einer Schnellwechselplatte (nicht gezeigt) des optischen Gerätes in eine Führung 17 drehbar befestigt. Die Schnellwechselplatte und die Führung 17 weisen komplementär ausgebildete Führungsflächen auf. Die Führung weist relativ zu einander verstellbare Halteelemente 18, 19 auf und eine Einrichtung 16 zum Feststellen der Schnellwechselplatte ist vorhanden, die ausgebildet ist, um den Abstand der Haltelemente 18, 19 zueinander zu verstellen.
Das optische Gerät ist also über die Schnellspanneinrichtung 6 mit dem zweiten Element 5 verbunden.

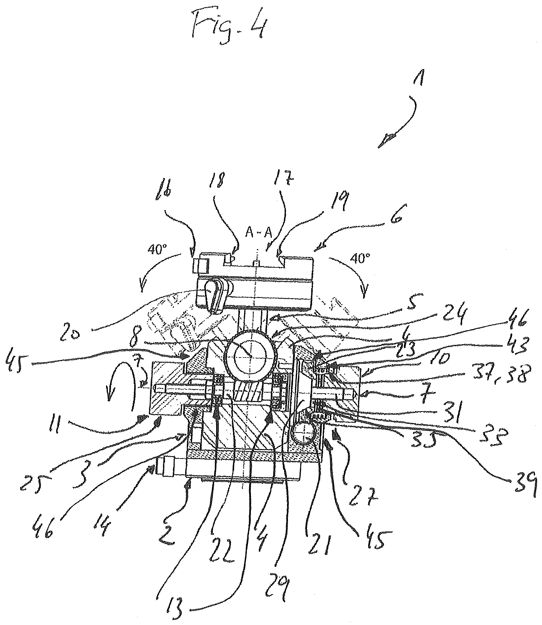

Die Schnellspanneinrichtung 6 kann gegenüber dem zweiten Element 5 um 360 Grad gedreht werden und kann über einen Arretierhebel 20 an jeder Position fixiert werden. Sowohl die Schwenkachse 7 als auch die zweite Schwenkachse 8 sind im ersten Element 4 angeordnet (vgl. Figur 4). Somit lässt sich durch diese Verschachtelung eine besonders kompakte Bauform erzielen.
Die Schwenkachse 7 verläuft dabei durch die Längsmittelachse des zylindrischen Elements 4.
Die Verstellung der Elemente 4 und 5 erfolgt jeweils über einen Drehknopf 9 bzw. 11, die jeweils eine Drehung einer Schnecke 21, 22 bewirken, auf der ein in diese eingreifendes Zahnrad 23, 24 läuft bzw. sich dreht. Bei den Antrieben 25, 26 handelt es sich also um Schneckengetriebe.
Die jeweilige Schnecke 21, 22 wirkt also auf das jeweilige Schneckenrad 23, 24 ein und bewirkt somit eine Verstellung des jeweiligen Elements 4 bzw. 5, da das Schneckenrad 23, 24 sich um die jeweilige Schenkachse 7 bzw. 8 dreht und mit dem jeweiligen Element 4 bzw. 5 in Wirkverbindung steht (bzw. bringbar ist, siehe unten).

Dabei ist der Antrieb 26 des zweiten Elements 5 fast vollständig innerhalb des ersten Elements 4 aufgenommen, d.h. sowohl die Schnecke 22 als auch das Schneckenrad 24 befinden sich praktisch vollständig innerhalb des Mantels des zylindrischen Elements 4. Lediglich ein unwesentlicher, keiner Teil des Schneckenrads 24 steht geringfügig hervor.

Der Antrieb 26 für die zweite Schwenkachse 8 verläuft entlang der ersten Schwenkachse 7 und liegt somit auf der Längsmittelachse des zylindrischen Elements 4.

Durch eine Verstellung mittels der Antriebe 25, 26 erfolgt eine präzise Einstellung und Ausrichtung der Halterung und somit des optischen Geräts.

Damit auch eine schnelle Verstellung um größere Wege möglich ist, kann die Antriebsfunktion jeweils entkoppelt werden, so dass eine freie Verstellung, wie bei einem Kugelkopf, möglich ist. Es versteht sich, dass diese Entkopplung jederzeit an jeder Position wieder rückgängig gemacht werden kann und die Wirkverbindung der Antriebe wieder hergestellt wird.

Dazu sind die Antriebe 25, 26 jeweils mit einem Entkopplungsmechnismus 27, 28 versehen.

Jeder Entkopplungsmechnismus 27, 28 umfasst einen entlang der Schwenkachse 7, 8 mit dem Element 4,5 verbundenen Konus 29, 30 mit einem Stift 31, 32.

Das jeweilige Zahnrad 23, 24 des Antriebs 25, 26 weist eine zentrale Öffnung 33, 34 auf, die an der dem Konus 29, 30 zugewandten Seite eine Innen umlaufenden Schrägfläche 35, 36 entsprechend dem Konus 29, 30 aufweist.

Hierdurch erfolgt im gekoppelten Zustand die Bewegungsübertragung zwischen Drehknopf 9 bzw. 11 über die Schnecke 21, 22 auf das Zahnrad 23, 24 und von diesem auf den Konus 29, 30.

Zum besseren Kraftschluss weisen die Innen umlaufende Schrägfläche 35, 36 des Zahnrads 23, 24 und der Konus 29, 30 sich entsprechenden Verzahnungen auf.

Durch den Entkopplungsmechanismus 27, 28 können jedoch das Zahnrad 23, 24 und der Konus 29, 30 außer eingriff gebracht werden, um die freie Bewegung zu erlauben.

Dazu wird der Konus 29, 30 und das Zahnrad 23, 24 entlang der Schwenkachse 7, 8 relativ zueinander verschoben.

Um dies zu bewirken, durchgreift jeweils der Stift 31, 32 das Zahnrad 23, 24 und greift auf der dem Konus 29, 30 abgewandten Seite in einen Stellknopf 10, 12 ein.

Der Konus und der Stift im Fall des Entkopplungsmechnismus des Antriebs 25 für das erste Element sind vom Element 4 selbst gebildet.

Zum In- oder Aussereingriffbringen des Zahnrads 23, 24 mit dem Konus 29, 30, wird das Zahnrad 23, 24 relativ zum Konus 23, 24 verschoben. Dazu wird der Stellknopf 10, 12 zur Betätigung auf dem Stifts 31, 32 durch Drehen in seiner Position verstellt, wobei der Stellknopf 10, 12 auf das Zahnrad 23, 24 mit seiner Stirnfläche einwirkt.

Eine Drehung des Stellknopfs 10, 12 bewirkt eine Verschiebung des Zahnrads 23, 24 entlang der jeweiligen Achse 7 bzw. 8.

Dazu greift der Stellknopf 10 mit einem Gewinde 37 an seiner Innenfläche in ein Gewinde 38 an dem Außenumfang des Stifts 31 ein. Eine Drehung des Stellknopfs 10 bewirkt daher eine Verschiebung seiner Längsposition entlang des Stifts 31, der also eine Gewindespindel ist. Der Stellknopf 10 und das Zahnrad 23 sind über ein Lager 39 zueinander drehbar verbunden. Somit kann das Zahnrad 23 sich um die Achse 7 drehen, wenn der Antrieb 25 betätigt wird.

Analog dazu greift der Stellknopf 12 mit einem Gewinde 42 an seiner Innenfläche in ein Gewinde 41 an dem Außenumfang des Stifts 32 ein, der also eine Gewindespindel ist. Eine Drehung des Stellknopfs 12 bewirkt daher eine Verschiebung seiner Längsposition entlang des Stifts 32. Der Stellknopf 12 und das Zahnrad 24 sind über ein Lager 40 zueinander drehbar verbunden. Somit kann das Zahnrad 24 sich um die Achse 8 drehen, wenn der Antrieb 26 betätigt wird.

Die Lagerung des ersten Elements 4 in dem Halteteil 3 erfolgt über seitliche Vorsprünge 45, die konzentrisch um die Schenkachse 7 angeordnete Durchbrüche 46 für den Durchgriff des Drehknopfes 11 bzw. des Stellknopfes 10 aufweisen. Der Drehknopf 11 bzw. der Stellknopfes 10 liegen dann in den Durchbrüchen 46. Die eigentliche Lagerung des ersten Elements 4 erfolgt somit einerseits auf links und rechts der Schnecke 22 angeordnete Lager 13 und somit über den verbundenen Drehknopf 11. Andererseits erfolgt die Lagerung über ein weiteres Lager 43, das auf der Seite des Stellknopfs 10 angeordnet ist und über das sich der Stellknopf 10, das Lager 39 und das Zahnrad 23 gemeinsam in Durchbruch 46 abstützen.

Die Lagerung des zweiten Elements 5 in dem ersten Element 4 erfolgt einerseits über die Spindel 32 in dem Stellknopf 12 und andererseits über einen zylindrischen Vorsprung 47, der in einer entsprechenden Bohrung 48 in dem ersten Element 4 ruht.

Verwendet man anstelle des Zahnrads 23, 24 jeweils ein analoges Reibrad und entfernt die Antriebe 25, 26 so erhält man durch den "Umbau" einen lediglich frei verstellbaren Stativkopf und keinen Getriebeneiger.

Somit ist klar, dass sich die Entkopplungsmechnismen und Arretierungsmechnismen bis auf das Zahnrad/Reibrad entsprechen können.

Das Reibrad kann identisch mit dem Zahnrad 23, 24 sein oder aufgrund der fehlenden Antriebsfunktion einfacher ausgestaltet sein, z.B. ohne Zähne.

**Bezugszeichenliste**

| | | | |
|---|---|---|---|
| 1 | Stativkopf | 33 | zentrale Öffnung |
| 2 | Drehteller | 34 | zentrale Öffnung |
| 3 | Halteteil | 35 | Schrägfläche |
| 4 | Element | 36 | Schrägfläche |
| 5 | Element | 37 | Gewinde |
| 6 | Schnellspanneinrichtung | 38 | Gewinde |
| 7 | Schwenkachse | 39 | Lager |
| 8 | Schwenkachse | 40 | Lager |
| 9 | Drehknopf | 41 | Gewinde |
| 10 | Stellknopf | 42 | Gewinde |
| 11 | Drehknopf | 43 | Lager |
| 12 | Stellknopf | 45 | Vorsprünge |
| 13 | Lager | 46 | Durchbrüche |
| 14 | Arretierhebel | 47 | Vorsprung |
| 15 | vertikale Achse | 48 | Bohrung |
| 16 | Einrichtung | | |
| 17 | Führung | | |
| 18 | Halteelement | | |
| 19 | Halteelement | | |
| 20 | Arretierhebel | | |
| 21 | Schnecke | | |
| 22 | Schnecke | | |
| 23 | Zahnrad | | |
| 24 | Zahnrad | | |
| 25 | Antrieb | | |
| 26 | Antrieb | | |
| 27 | Entkopplungsmechnismus | | |
| 28 | Entkopplungsmechnismus | | |
| 29 | Konus | | |
| 30 | Konus | | |
| 31 | Stift | | |
| 32 | Stift | | |

## Patentansprüche

1. Halterung für ein optisches Gerät zur Veränderung der Ausrichtung des optischen Geräts, insbesondere für Foto-, Video- oder Filmkameras, mit einem ersten Bauteil (4) mit einer ersten Schwenkachse (7) zur Verbindung mit einem Stativ und einem zweiten Bauteil (5) mit einer zweiten Schwenkachse (8) zur Verbindung mit dem optischen Gerät, wobei die zwei Schwenkachsen quer, insbesondere im rechten Winkel, zu einander verlaufen und das erste und zweite Bauteil unabhängig voneinander um die jeweilige Schwenkachse verstellbar sind, wobei die erste Schwenkachse im ersten Bauteil und die zweite Schwenkachse ebenfalls im ersten Bauteil angeordnet sind, das erste Bauteil (4) über ein drittes Bauteil (2) mit einer dritten Schwenkachse (15) mit dem Stativ verbindbar ist, das zweite Bauteil (5) um die zweite Schwenkachse (8) in dem ersten Bauteil (4) verschwenkbar gelagert ist und das erste Bauteil (4) um die erste Schwenkachse (7) in dem dritten Bauteil (2) verschwenkbar gelagert ist, wobei das erste Bauteil (4) ein zylindrisches Bauteil ist und die erste Schwenkachse (7) durch die Längsmittelachse des zylindrischen Bauteils verläuft, wobei das erste und zweite Bauteil (4, 5) unabhängig voneinander jeweils über einen Antrieb (25, 26) um die jeweilige Schwenkachse (7, 8) verstellbar sind, und wobei die Antriebe durch Schneckengetriebe gebildet sind, die eine Schnecke (21, 22) aufweisen, die auf ein Schneckenrad (23, 24) einwirkt, das sich um die jeweilige Schwenkachse dreht, **dadurch gekennzeichnet dass** der Antrieb (26) für die zweite Schwenkachse (8) auf der Längsmittelachse des zylindrischen Bauteils (4) liegt und dass die Antriebe jeweils mit einem Entkopplungsmechnismus (27, 28) versehen sind, der einen entlang der Schwenkachse mit dem Bauteil verbundenen Konus (29, 30) mit einem Stift (31, 32) umfasst, wobei das Schneckenrad des Antriebs eine zentrale Öffnung (33, 34) aufweist, die an der dem Konus zugewandten Seite eine Innen umlaufenden Schrägfläche (35, 36) entsprechend dem Konus (29, 30) aufweist und der Stift (31, 32) das Schneckenrad (23, 24) durchgreift und auf der dem Konus abgewandten Seite in einen Stellknopf (10, 12) eingreift, der zum In- oder Aussereingriffbringen des Schneckenrads mit dem Konus, das Schneckenrad (23, 24)) und den Konus (29, 30) relativ zueinander verschiebt.

2. Halterung nach Anspruch 1, **dadurch gekennzeichnet, dass** der Antrieb für die zweite Schwenkachse entlang der ersten Schwenkachse verläuft.

3. Halterung nach Anspruch 1, **dadurch gekennzeichnet, dass** der Stift im Fall des Entkopplungsmechnismus des Antriebs für das zweite Bauteil eine Spindel ist.

4. Halterung nach Anspruch 1, **dadurch gekennzeichnet, dass** der Konus und der Stift im Fall des Entkopplungsmechnismus des Antriebs für das erste Bauteil vom Bauteil selbst gebildet sind.

5. Halterung nach einem der vorhergehenden Ansprüche, **dadurch gekennzeichnet, dass** die Innen umlaufende Schrägfläche des Schneckenrads und der Konus mit sich entsprechenden Verzahnungen versehen sind.

## Claims

1. Holder for an optical device for changing the orientation of the optical device, in particular for photographic, video or film cameras, having a first component (4) having a first pivot axis (7) for connecting to a tripod and a second component (5) having a second pivot axis (8) for connecting to the optical device, wherein the two pivot axes extend transversely, in particular at a right angle, with respect to each other and the first and second components can be adjusted in a mutually independent manner about the respective pivot axis, wherein the first pivot axis is arranged in the first component and the second pivot axis is likewise arranged in the first component, the first component (4) can be connected to the tripod via a third component (2) having a third pivot axis (15), the second component (5) is mounted to be pivotable about the second pivot axis (8) in the first component (4) and the first component (4) is mounted to be pivotable about the first pivot axis (7) in the third component (2), wherein the first component (4) is a cylindrical component and the first pivot axis (7) extends through the longitudinal centre axis of the cylindrical component, wherein the first and second components (4, 5) can be adjusted about the respective pivot axis (7, 8) in a mutually independent manner in each case via a drive (25, 26), and wherein the drives are formed by worm gears which comprise a worm (21, 22) which acts on a worm wheel (23, 24) which rotates about the respective pivot axis, **characterised in that** the drive (26) for the second pivot axis (8) lies on the longitudinal centre axis of the cylindrical component (4), and **in that** the drives are provided in each case with a decoupling mechanism (27, 28) which includes a cone (29, 30), connected to the component along the pivot axis, having a pin (31, 32), wherein the worm wheel of the drive has a central opening (33, 34) which, on the side facing towards the cone, has an internally circumferential inclined surface (35, 36) corresponding to the cone (29, 30) and the pin (31, 32) engages through the worm wheel (23, 24) and engages into a control button (10, 12) on the side facing away from the cone, which button displaces the worm wheel (23, 24) and the cone (29, 30) relative to one another to bring the worm wheel into or out of engagement with the cone.

2. Holder as claimed in claim 1, **characterised in that** the drive for the second pivot axis extends along the first pivot axis.

3. Holder as claimed in claim 1, **characterised in that** the pin in the case of the decoupling mechanism of the drive for the second component is a spindle.

4. Holder as claimed in claim 1, **characterised in that** the cone and the pin in the case of the decoupling mechanism of the drive for the first component are formed by the component itself.

5. Holder as claimed in any one of the preceding claims, **characterised in that** the internally circumferential inclined surface of the worm wheel and the cone are provided with mutually corresponding toothed arrangements.

## Revendications

1. Support pour appareil optique destiné à modifier l'orientation de l'appareil optique, en particulier pour appareils photographiques, caméscopes ou caméras, ledit support comprenant un premier composant (4) ayant un premier axe de pivotement (7) destiné à être relié à un pied et un deuxième composant (5) ayant un deuxième axe de pivotement (8) destiné à être relié à l'appareil optique, les deux axes de pivotement s'étendant transversalement, notamment à angle droit, l'un par rapport à l'autre et les premier et deuxième composants étant réglables indépendamment l'un de l'autre par rapport à l'axe de pivotement respectif, le premier axe de pivotement étant disposé dans le premier composant et le deuxième axe de pivotement étant disposé dans le deuxième composant, le premier composant (4) pouvant être relié au pied par l'intermédiaire d'un troisième composant (2) ayant un troisième axe de pivotement (15), le deuxième composant (5) étant monté de manière pivotante sur le deuxième axe de pivotement (8) dans le premier composant (4), et le premier composant (4) étant monté de manière pivotante sur le premier axe de pivotement (7) dans le troisième composant (2), le premier composant (4) étant un composant cylindrique et le premier axe de pivotement (7) passant par l'axe central longitudinal du composant cylindrique, les premier et deuxième composants (4, 5) pouvant être réglés indépendamment l'un de l'autre chacun par l'intermédiaire d'un entraînement (25, 26) sur l'axe de pivotement respectif (7, 8), et les entraînements étant formés par des engrenages à vis sans fin qui comportent une vis sans fin (21, 22) qui agit sur une roue tangente (23, 24) qui tourne sur l'axe de pivotement respectif, **caractérisé en ce que** l'entraînement (26) destiné au deuxième axe de pivotement (8) est situé sur l'axe central longitudinal du composant cylindrique (4), et **en ce que** les entraînements sont chacun pourvus d'un mécanisme de découplage (27, 28) qui comprend un cône (29, 30) relié au composant le long de l'axe de pivotement et muni d'une tige (31, 32), la roue tangente de l'entraînement comporte un orifice central (33, 34) qui comporte du côté tourné vers le cône une surface inclinée périphérique intérieure (35, 36) correspondant au cône (29, 30) et la tige (31, 32) traverse la roue tangente (23, 24) et s'engage du côté opposé au cône dans un bouton de réglage (10, 12) qui déplace la roue tangente (23, 24) et le cône (29, 30) l'un par rapport à l'autre pour engager la roue tangente avec le cône ou la désengager de celui-ci.

2. Support selon la revendication 1, **caractérisé en ce que** l'entraînement destiné au deuxième axe de pivotement s'étend le long du premier axe de pivotement.

3. Support selon la revendication 1, **caractérisé en ce que**, dans le cas du mécanisme de découplage de l'entraînement destiné au deuxième composant, la tige est une broche.

4. Support selon la revendication 1, **caractérisé en ce que**, dans le cas du mécanisme de découplage de l'entraînement destiné au premier composant, le cône et la tige sont formés par le composant lui-même.

5. Support selon l'une des revendications précédentes, **caractérisé en ce que** la surface inclinée périphérique intérieure de la roue tangente et le cône sont munis de dentures qui se correspondent.
